# FASCICULE DE BREVET EUROPEEN

(11) **EP 2 188 603 B1**
(45) Date de publication et mention de la délivrance du brevet: **16.03.2011**
(21) Numéro de dépôt: 08852840.1
(22) Date de dépôt: 10.09.2008
(51) Int. Cl.: G01G 19/44, G01G 23/01, G01G 23/16

(54) **APPAREIL DE PESAGE AVEC DISPOSITIF DE DETECTION DE POSITION**
WAAGSCHALE MIT POSITIONSERKENNUNGSVORRICHTUNG
WEIGHING SCALE INCLUDING A POSITION DETECTION DEVICE

(30) Priorité: 12.09.2007 FR 0706385
(43) Date de publication de la demande: 26.05.2010
(73) Titulaire: SEB S.A., 69130 Ecully (FR)
(72) Inventeur: PATRAS, Yves, F-74600 Seynod (FR)
(74) Mandataire: Kiehl, Hubert
(86) Numéro de dépôt international: PCT/FR2008/001265
(87) Numéro de publication internationale: WO 2009/066038

(56) Documents cités:
- WO-A-88/09485
- DE-C1- 19 523 034
- DE-C1- 19 609 779
- JP-A- 61 000 718
- US-A- 3 986 012
- US-A- 4 236 222
- US-A- 5 832 417

## Description

La présente invention concerne un appareil de pesage électronique; plus particulièrement un pèse-personne électronique ou une balance de ménage pouvant être stocké dans n'importe quelle position.

Les appareils du type précité comportent généralement un socle équipé de pieds, un afficheur pour afficher le poids mesuré et un circuit de pesage pour mesurer un poids présent sur le socle incluant un dispositif de calibration du zéro de l'appareil. Lors de la mise en position d'utilisation de l'appareil, le circuit de pesage est activé manuellement ou automatiquement pour commander un cycle de calibration du zéro puis un cycle de pesée.

On connaît du document US 6838624 un pèse-personne dont le circuit de pesage est activé par un interrupteur positionné dans un des pieds du socle. Lorsque le pèse-personne est mis en position d'utilisation sur le sol, le poids de l'appareil actionne automatiquement l'interrupteur qui active le circuit de pesage et commande un cycle de calibration du zéro. Un deuxième interrupteur situé dans un deuxième pied et actionné par la présence d'un poids sur le socle permet de lancer un cycle de pesée.

On connaît aussi du document US5832417 un pèse-personne électronique utilisable en position horizontale et stockable dans n'importe quelle position, comportant un dispositif de calibration du zéro et un circuit de pesage qui effectue une mesure de poids tous les intervalles de temps T et détecte un changement de position de l'appareil. Lorsque le pèse-personne est mis en position de stockage, le change du poids désactive le cycle de calibration du zéro.

Ce type d'appareil présente l'inconvénient de nécessiter plusieurs interrupteurs équipés de fils de câblage connectés au circuit de pesage. Cette construction entraîne un coût de fabrication et de montage important et, de surcroît, peut induire des problèmes de fiabilité liés à l'oxydation des contacts de l'interrupteur ou à des coupures dans les fils de câblage.

Le but de la présente invention est de proposer un appareil qui permette de détecter automatiquement la mise en position d'utilisation de l'appareil en s'affranchissant de l'utilisation d'interrupteur et qui, par conséquent, soit simple et très économique à mettre en oeuvre.

Un autre but de l'invention est de proposer un appareil qui présente une grande fiabilité en minimisant l'utilisation de fils de câblage.

Ces buts sont atteints avec un pèse-personne électronique utilisable en position horizontale et stockable dans n'importe quelle position, comportant un socle équipé de pieds, un afficheur pour afficher le poids mesuré et un circuit de pesage pour mesurer le poids d'une personne montée sur le socle incluant au moins un capteur de poids, et un dispositif de calibration du zéro du pèse-personne du fait que le circuit de pesage effectue une mesure de poids tous les intervalles de temps T et détecte un changement de position de l'appareil lorsque la variation de poids en valeur absolue ΔP entre deux mesures successives est comprise entre une valeur mini Pₘᵢₙᵢ mémorisée et une valeur Pₘₐₓᵢ mémorisée, ledit circuit de pesage commandant le démarrage d'un cycle de calibration du zéro après chaque détection de changement de position.

Par mise en position horizontale, on comprend le passage d'une position de stockage quelconque, par exemple verticale, à la position d'utilisation horizontale où les pieds prennent appui sur un plan horizontal.

Par dispositif de calibration du zéro, on comprend un dispositif qui recalcule le zéro avant une mesure de poids ; ceci pour compenser les variations de mesure des capteurs de poids liées aux conditions d'utilisation du type température, hygrométrie dans lesquelles le pèse-personne est placé.

Pour ce faire, le dispositif de calibration du zéro effectue une série de mesure à vide, calcule une valeur moyenne équivalente au poids à vide et mémorise ce poids. Le poids à vide mémorisé est considéré comme le nouveau zéro du pèse-personne. Lors d'une pesée, le poids affiché sera égal au poids mesuré dont est soustrait le poids à vide mémorisé.

Par variation de poids ΔP, on comprend la valeur absolue obtenue par différence de deux pesées successives séparées par un intervalle de temps T.

Selon l'invention, le circuit de pesage identifie une mise en position de l'appareil en détectant une variation équivalente au poids de l'appareil ; ceci sans pièces supplémentaires ajoutées au circuit de pesage, ce qui permet d'avoir une construction simple et économique de l'appareil.

Avantageusement, le circuit de pesage commande le démarrage d'un cycle de pesée si ledit circuit de pesage constate une variation de poids ΔP supérieure à une valeur Pₘₐₓᵢ mémorisée.

Cette disposition permet de détecter un appareil déjà en position d'utilisation, la valeur Pₘₐₓᵢ étant supérieure au poids de appareil et correspondant à une personne montant sur le socle pour se peser.

De préférence, le circuit de pesage comporte un capteur de poids dans chaque pied et on détecte le changement de position en mesurant une variation de poids ΔP soit sur les deux capteurs situés dans les pieds arrières du socle ou soit sur les deux capteurs situés dans les pieds avants.

Cette disposition permet au circuit de pesage de réaliser des mesures de demi poids très rapidement en analysant seulement deux des quatre capteurs.

Avantageusement, la valeur Pₘᵢₙᵢ mémorisée est comprise entre 0,3 kg et 3 kg, de préférence 0,6 kg.

Cette disposition permet au circuit de pesage de voir une variation de poids équivalente à la moitié du poids de l'appareil, la mesure n'étant réalisée que sur la moitié des capteurs.

Avantageusement, la valeur Pₘₐₓᵢ mémorisée est comprise entre 1 kg et 6 kg, de préférence 4,8 kg.

Avantageusement, la valeur de l'intervalle de temps T est comprise entre 0,1 s et 5s, de préférence 0,7 s.

Cette disposition permet dans la majorité des cas de détecter la mise en position d'utilisation du pèse-personne et de réaliser la calibration du zéro avant que la personne ne monte sur l'appareil. Cette disposition permet également de garantir une bonne durée de vie des batteries qui alimentent le circuit de pesage.

De préférence, le socle comporte dans sa partie arrière une base pour un maintien en position verticale et dans sa partie avant une poignée de manutention.

Cette disposition permet au pèse-personne d'avoir une position de stockage verticale stable avec une poignée pour faciliter les différentes manutentions.

L'invention sera mieux comprise à l'étude d'un mode de réalisation pris à titre nullement limitatif et illustré dans les figures annexées dans lesquelles :
- La figure 1 est une vue éclatée en perspective de l'appareil selon un mode particulier de réalisation de l'invention.
- La figure 2 illustre un exemple d'algorithme de fonctionnement du circuit de pesage utilisé avec l'appareil de l'invention.

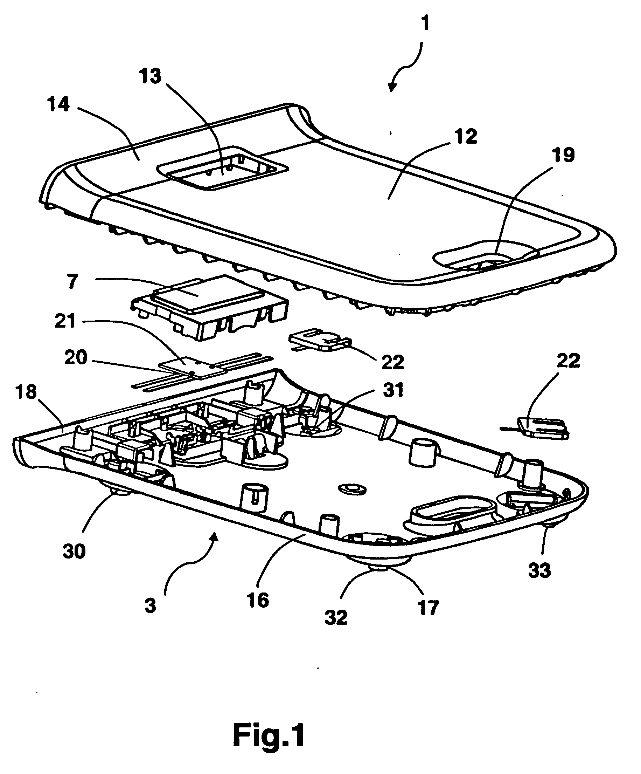

Tel que visible sur la figure 1, le pèse-personne électronique 1 comporte un socle 3 de forme générale parallélépipédique équipé à chacun de ses coins de quatre pieds 30, 31,32, 33. Le socle 3 comprend deux demi enveloppes, une demi enveloppe supérieure 12 plate équipée vers l'arrière d'une ouverture 13 pour rendre visible un afficheur 7 et une demi enveloppe inférieure 16 munie de quatre ouvertures 17 dans ses coins pour le passage des quatre pieds 30, 31, 32, 33.

Le socle 3 comprend dans sa partie arrière une forme légèrement évasée faisant office de base pour un rangement en position verticale ; chaque demi enveloppe 12, 16 comportant une demi base 14, 18. Le socle 3 comprend également dans sa partie avant une ouverture 19 faisant office de poignée de manutention.

Le socle 3 supporte un circuit de pesage 20 qui comporte un circuit électronique 21 alimenté par des batteries (non représentées sur la figure 1) et quatre capteurs 22 (dont deux sont représentés sur la figure 1) assemblés dans l'enveloppe inférieure 16 en face de chaque pied 30, 31,32, 33. Les capteurs 22 comprennent des jauges de contraintes reliées au circuit électronique 21 par des câblages (non représentés sur la figure 1). Lors d'une pesée, les jauges de contraintes émettent un signal électrique vers le circuit électronique 21 qui calcule alors le poids et l'affiche sur l'afficheur 7.

Ce signal électrique varie en fonction des conditions dans lesquelles se trouvent les capteurs du type température et hygrométrie.

Pour corriger ces variations, le circuit de pesage 20 comporte un dispositif de calibration du zéro. A chaque mise en position d'utilisation du pèse-personne 1, ce dispositif effectue une série de mesures à vide, sans charge sur le socle 3 autre que le poids de l'appareil, calcule la moyenne des mesures réalisées et mémorise dans le circuit de pesage 20 cette moyenne qui devient le nouveau zéro.

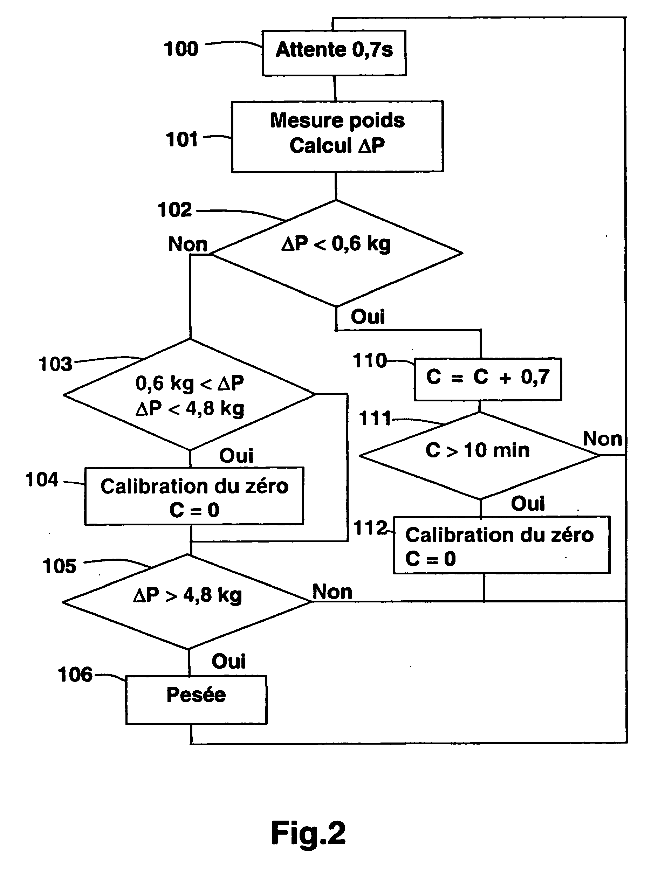

La figure 2 représente la succession d'étapes permettant au circuit de pesage 20 de faire fonctionner le pèse-personne.

L'étape 100 est une étape d'attente sur un intervalle de temps T d'une valeur de 0,7 seconde. Cette attente permet d'activer périodiquement le circuit de pesage et ainsi d'économiser les batteries. Lorsque l'intervalle de temps T est écoulé, le circuit de pesage passe à l'étape 101.

L'étape 101 est une étape de mesure. Le circuit de pesage effectue une mesure de poids sur les deux pieds arrière et calcule la variation de poids ΔP entre cette mesure et la mesure précédente effectuée 0,7 seconde plus tôt.

L'étape 102 est une étape de test. Si la variation de poids ΔP a une valeur inférieure à 0,6 kg, l'appareil 1 est en attente en position horizontale ou en position de stockage et le circuit de pesage 20 passe à l'étape 110.

Le circuit de pesage comporte un compteur de temps C. A l'étape 110, le circuit de pesage incrémente ce compteur de 0,7 seconde et passe à l'étape 111. L'étape 111 est une étape de test du compteur C. Si le compteur atteint dix minutes signifiant que le pèse-personne est en attente dans la même position depuis dix minutes, le circuit de pesage 20 passe à l'étape 112 : il commande un cycle de calibration du zéro, la mise à zéro du compteur C et revient à l'étape 100. Si le compteur n'a pas atteint les dix minutes, le circuit de pesage revient directement à l'étape 100.

Si la variation de poids ΔP a une valeur supérieure à 0,6 kg, le circuit de pesage 20 passe à l'étape 103.

L'étape 103 est une étape de test. Si la variation de poids ΔP a une valeur comprise entre 0,6 kg et 4,8 kg, le pèse-personne vient de changer de position alors le circuit de pesage 20 passe à l'étape 104 et commande le dispositif de calibration du zéro, la mise à zéro du compteur C et passe à l'étape 105. Si la variation de poids ΔP n'a pas une valeur comprise entre 0,6 kg et 4,8 kg, le circuit de pesage 20 passe directement à l'étape 105.

L'étape 105 est également une étape de test. Si la variation de poids ΔP a une valeur supérieure à 4,8 kg, cela signifie qu'une personne est montée sur le pèse-personne 1 alors le circuit de pesage 20 passe à l'étape 106 et commande un cycle de pesée, puis passera à l'étape 100.

En fonctionnement, le pèse-personne 1 passe d'une position de stockage verticale à une position d'utilisation horizontale. Après une période d'attente maximum de 0,7 seconde, le circuit de pesage 20 est activé et ce circuit de pesage 20 constate une variation de poids comprise entre 0,6 kg et 4,8 kg, équivalente au demi poids de l'appareil 1. Le circuit de pesage 20 commande alors un cycle de calibration du zéro et après ce cycle, l'appareil 1 est prêt pour une pesée.

Dès qu'une personne monte sur l'appareil 1, après une période maximum de 0,7 seconde, le circuit de pesage 20 constate une variation de poids supérieure à 4,8 kg et commande un cycle de pesée.

Après l'opération de pesée, le pèse-personne 1 est remis en position de stockage verticale. Le circuit de pesage 20 va alors détecter une variation de poids équivalente au demi poids de l'appareil et commande un cycle de calibration du zéro.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Pèse-personne électronique (1) utilisable en position horizontale et stockable dans n'importe quelle position, comportant un socle (3) équipé de pieds (30, 31,32, 33), un afficheur (7) pour afficher le poids mesuré et un circuit de pesage (20) pour mesurer le poids d'une personne montée sur le socle incluant au moins un capteur de poids (22), et un dispositif de calibration du zéro du pèse-personne **caractérisé en ce que** le circuit de pesage (20) est adapté à effectuer une mesure de poids tous les intervalles de temps T et à détecter un changement de position de l'appareil lorsque la variation de poids en valeur absolue ΔP entre deux mesures successives est comprise entre une valeur mini Pₘᵢₙᵢ mémorisée et une valeur Pₘₐₓᵢ mémorisée, ledit circuit de pesage (20) étant apte à commander le démarrage d'un cycle de calibration du zéro après chaque détection de changement de position.

2. Pèse-personne électronique (1) selon la revendication 1 **caractérisé en ce que** le circuit de pesage (20) commande le démarrage d'un cycle de pesée si ledit circuit de pesage (20) constate une variation de poids ΔP supérieure à une valeur Pₘₐₓᵢ mémorisée.

3. Pèse-personne électronique (1) selon l'une quelconque des revendications 1 à 2 **caractérisé en ce que** le circuit de pesage comporte un capteur de poids dans chaque pied et **en ce qu'**on détecte le changement de position en mesurant une variation de poids ΔP soit sur les deux capteurs situés dans les pieds arrières (30, 31) du socle (3) ou soit sur les deux capteurs situés dans les pieds avants (32, 33).

4. Pèse-personne électronique (1) selon l'une quelconque des revendications 1 à 3 **caractérisé en ce que** la valeur Pₘᵢₙᵢ mémorisée est comprise entre 0,3 kg et 3 kg, de préférence 0,6 kg.

5. Pèse-personne électronique (1) selon l'une quelconque des revendications 1 à 4 **caractérisé en ce que** la valeur Pₘₐₓᵢ mémorisée est comprise entre 1 kg et 6 kg, de préférence 4,8 kg.

6. Pèse-personne électronique (1) selon l'une quelconque des revendications 1 à 5 **caractérisé en ce que** la valeur de l'intervalle de temps T est comprise entre 0,1 s et 5 s, de préférence 0,7 s.

7. Pèse-personne électronique (1) selon l'une quelconque des revendications 1 à 6 **caractérisé en ce que** le socle (3) comporte dans sa partie arrière une base (14, 18) pour un maintien en position verticale et dans sa partie avant une poignée (19) de manutention.

## Claims

1. An electronic personal weighing scale (1) which can be used horizontally and stored in any position, comprising a base plate (3) provided with feet (30, 31, 32, 33), a display (7) displaying the weight measured and a weighing circuit (20) for measuring the weight of a person standing on the base plate including at least one weight sensor (22), and a zero calibration device of the weighing scale, **characterised in that** the weighing circuit (20) is designed to take weight measurements at time intervals T and to detect a change in the position of the appliance when the weight variation in absolute value ΔP between two successive measurements ranges between a stored minimum value Pₘᵢₙᵢ and a stored value Pₘₐₓᵢ, said weighing circuit (20) being capable of triggering the start of a zero calibration cycle every time a change in position is detected.

2. An electronic weighing scale (1) according to claim 1 **characterised in that** the weighing circuit (20) triggers the start of a weighing cycle if said weighing circuit (20) detects a weight variation ΔP greater than a stored value Pₘₐₓᵢ.

3. An electronic weighing scale (1) according to any one of claims 1 to 2 **characterised in that** the weighing circuit comprises a weight sensor in each foot and **in that** the change in position is detected by measuring a weight variation Δ**P** either on both the sensors located in the rear feet (30, 31) of the base plate (3) or on both the sensors located in the front feet (32, 33).

4. An electronic weighing scale (1) according to any one of claims 1 to 3 **characterised in that** the stored value Pₘᵢₙᵢ ranges between 0.3 kg and 3 kg, preferably 0.6 kg.

5. An electronic weighing scale (1) according to any one of claims 1 to 4 **characterised in that** the stored value Pₘₐₓᵢ ranges between 1 kg and 6 kg, preferably 4.8 kg.

6. An electronic weighing scale (1) according to one any of claims 1 to 5 **characterised in that** the value of the time interval T ranges between 0.1 s and 5 s, preferably 0.7 s.

7. An electronic weighing scale (1) according to any one of claims 1 to 6 **characterised in that** the base plate (3) comprises a base (14, 18) in its rear part to maintain it in vertical position and a carrying handle (19) in its front part.

## Patentansprüche

1. Elektronische Personenwaage (1), die in horizontaler Position verwendbar und in jeder beliebigen Position aufzubewahren ist, umfassend einen Sockel (3), der mit Füßen (30, 31, 32, 33) ausgestattet ist, eine Anzeige (7) zum Anzeigen des gemessenen Gewichts und einen Wägeschaltkreis (20) zum Messen des Gewichts einer Person, die auf den Sockel gestiegen ist, der mindestens einen Gewichtssensor (22) umfasst, und eine Nullstellungseinrichtung der Personenwaage, **dadurch gekennzeichnet, dass** der Wägeschaltkreis (20) angepasst ist, eine Gewichtsmessung in den Zeitabständen T durchzuführen und eine Positionsänderung des Gerätes zu erfassen, sobald die Gewichtsvariation in absolutem Wert ΔP zwischen zwei aufeinanderfolgenden Messungen zwischen einem gespeicherten Mindestwert *Pₘᵢₙᵢ* und einem gespeicherten Wert *Pₘₐₓᵢ* liegt, wobei der Wägeschaltkreis (20) imstande ist, nach jeder Erfassung der Positionsänderung den Start eines Nullstellungszyklus zu befehlen.

2. Elektronische Personenwaage (1) nach Anspruch 1, **dadurch gekennzeichnet, dass** der Wägeschaltkreis (20) den Start eines Wägezyklus befiehlt, wenn der Wägeschaltkreis (20) eine Gewichtsvariation ΔP feststellt, die über einem gespeicherten Wert *Pₘₐₓᵢ* liegt.

3. Elektronische Personenwaage (1) nach einem der Ansprüche 1 bis 2, **dadurch gekennzeichnet, dass** der Wägeschaltkreis in jedem Fuß einen Gewichtssensor umfasst und **dadurch**, dass die Positionsänderung erfasst wird, indem eine Gewichtsvariation ΔP entweder an den zwei Sensoren in den Hinterfüßen (30, 31) des Sockels (3) oder an den zwei Sensoren in den Vorderfüßen (32, 33) gemessen wird.

4. Elektronische Personenwaage (1) nach einem der Ansprüche 1 bis 3, **dadurch gekennzeichnet, dass** der gespeicherte Wert *Pₘᵢₙᵢ* bei zwischen 0,3 kg und 3 kg, vorzugsweise bei 0,6 kg liegt.

5. Elektronische Personenwaage (1) nach einem der Ansprüche 1 bis 4, **dadurch gekennzeichnet, dass** der gespeicherte Wert *Pₘₐₓᵢ* bei zwischen 1 kg und 6 kg, vorzugsweise bei 4,8 kg liegt.

6. Elektronische Personenwaage (1) nach einem der Ansprüche 1 bis 5, **dadurch gekennzeichnet, dass** der Wert des Zeitabstands T bei zwischen 0,1 s und 5 s, vorzugsweise bei 0,7 s liegt.

7. Elektronische Personenwaage (1) nach einem der Ansprüche 1 bis 6, **dadurch gekennzeichnet, dass** der Sockel (3) in seinem hinteren Teil eine Basis (14, 18) zum Halten in vertikaler Position und in seinem vorderen Teil einen Griff (19) für den Transport umfasst.
